**Europäisches Patentamt**

**European Patent Office**

**Office européen des brevets**

(19)

(11) Veröffentlichungsnummer : **0 052 301**
**B1**

# EUROPÄISCHE PATENTSCHRIFT

(12)

(45) Veröffentlichungstag der Patentschrift :
08.02.84

(21) Anmeldenummer : 81109457.2

(22) Anmeldetag : 31.10.81

(51) Int. Cl.³ : **C 09 K 3/10**, C 08 G 18/76,
C 04 B 41/28

(54) Verfahren zum Abdichten von Bauwerken.

(30) Priorität : 13.11.80 DE 3042821

(43) Veröffentlichungstag der Anmeldung :
26.05.82 Patentblatt 82/21

(45) Bekanntmachung des Hinweises auf die Patenterteilung : 08.02.84 Patentblatt 84/06

(84) Benannte Vertragsstaaten :
BE DE FR GB IT NL

(56) Entgegenhaltungen :
AT-B- 298 324
AU-B- 428 592
CH-A- 484 257
DD-A- 122 099
DE-A- 2 623 401
DE-A- 2 713 857
DE-A- 2 851 313
FR-A- 2 248 251
GB-A- 1 486 232
GB-A- 1 572 781
GB-A- 1 577 999
US-A- 3 798 186

(73) Patentinhaber : BAYER AG
Zentralbereich Patente, Marken und Lizenzen
D-5090 Leverkusen 1, Bayerwerk (DE)

(72) Erfinder : Gruber, Hermann, Dr.
Paul-Klee-Strasse 87
D-5090 Leverkusen 1 (DE)
Erfinder : Kober, Hermann
Unterscheider Weg 34
D-5060 Bergisch-Gladbach (DE)

## Verfahren zum Abdichten von Bauwerken

Die vorliegende Erfindung betrifft ein neues Verfahren zum Abdichten von Bauwerken unter Verwendung von neuartige Verbindungen mit freien Isocyanatgruppen aufweisenden Abdichtungsmitteln.

Zur Abdichtung von Rissen und Undichtigkeiten in Bauwerken hat die Bautechnik verschiedene Verfahren entwickelt. Die einfachste Art ist die Verwendung eines Einpreßmörtels aus Wasser/Zement-Suspensionen. Solche Suspensionen dienen zum Injizieren in Lockergesteinsböden und Klüften, in Felsbeton oder Mauerwerk. Eine Verpressung von Rißbreiten unter 3 mm ist aber mit Zementemulsionen praktisch nicht mehr durchführbar, da die sich an den Rißflanken absetzenden feinen Zementteilchen eine satte Verpressung tiefreichender Risse unmöglich machen. Zur Verpressung von feinen Rissen unter 3 mm Breite sind Injektionsharze entwickelt worden, die unterschiedliche Funktionen haben. Generell kann man 2 Anwendungsgebiete unterscheiden : Die kraftschlüssige Verklebung gerissener Konstruktionen und die Abdichtung von gerissenen bzw. wasserdurchlässigen Bauteilen.

Die angewandte Arbeitsmethode ist dabei ein und dieselbe, der Unterschied liegt nur in der Art der verpreßten Materialien. Für die kraftschlüssige Verklebung benötigt man Materialien mit hohen mechanischen Festigkeiten und guten Hafteigenschaften. Bei diesem Verfahren wird z. B. ein dünnflüssiges Epoxidharz mit Drücken bis 200 bar in Risse und Hohlräume des Bauwerkes eingepreßt, so daß nach der Aushärtung des Harzes wieder ein monolitischer Zusammenhang gegeben ist.

Für die Abdichtung von wasserdurchlässigen Bauteilen braucht man dagegen Materialien, deren Härtung durch Feuchtigkeit gefördert oder zumindest nicht gestört wird, die bei der Härtung minimal schwinden und die eine gewisse Elastizität besitzen. Ein weiterer Zweck der Anwendung von Injektionsharzen ergibt sich durch die Notwendigkeit, den Bewehrungsstahl bei Stahlbetonkonstruktionen vor Korrosion zu schützen. Nach dem derzeitigen Stand der Technik werden unter günstigen Verhältnissen Rißbreiten von 0,2 mm als unbedenklich für die Korrosion der Bewehrungsstähle angesehen ; unter ungünstigen Verhältnissen, z. B. unter der Einwirkung korrosionsfördernder Stoffe, kann diese Grenze aber auch auf 0,1 mm sinken. Der Arbeitsvorgang umfaßt folgende Schritte :

1. Bohren von Injektionslöchern etwa alle 10 bis 50 cm bis in die gewünschte Injektionstiefe.
2. Abdichten der Risse an der Betonoberfläche, z. B. durch Kunstharzmörtel.
3. Einsetzen von sogenannten Packern in die Injektionslöcher. Bei diesen Geräten handelt es sich um Rückschlagventile, die sich beim Einschrauben mittels einer Gummimanschette selbst abdichten.
4. Anschluß der Schläuche für den Druckbehälter an die Packer und Verpressen so lange, bis an den benachbarten Punkten das Injektionsharz austritt.

Während für die kraftschlüssigen Verbindungen häufig flüssige, kalthärtende Epoxidharze verwendet werden, werden für die Abdichtung oft Polyurethanharze herangezogen.

Die bekannten Polyurethan-Bindemittel werden durch Vermischen eines Polyisocyanates mit einer Polyhydroxylverbindung gebildet, wobei die beiden Komponenten unter Urethanbildung miteinander reagieren. Bei Anwesenheit von Wasser in den abzudichtenden Formationen entsteht infolge einer Nebenreaktion Kohlendioxid-Gas, das eine in diesem Falle erwünschte Volumenvergrößerung des Abdichtungsharzes bewirkt. Da in den abzudichtenden Bauwerken wohl in jedem Falle Wasser anzutreffen ist — auch ein trocken erscheinender Baustoff wie Beton enthält noch eine Restfeuchtigkeit von mindestens 3,5 % — ist die $CO_2$-Gasbildung ein notwendiger und chemisch bedingter Bestandteil des Abdichtungsverfahrens. Unter den heutigen Gesichtspunkten einer weitgehenden Umwelthygiene ist besonders zu untersuchen, wieweit das Grundwasser bzw. in besonderen Fällen auch Trinkwasser durch die injizierten Kunstharze geschädigt werden können. Dabei müssen die lösungsmittelhaltigen Harze ungünstig beurteilt werden. In der Deutschen Offenlegungsschrift 2 851 313 und der Österreichischen Patentschrift Nr. 259 190 werden isocyanathaltige Isolierflüssigkeiten mit 20 bis 60 % Diisocyanat beschrieben, wobei der Rest aus Lösungsmittelgemischen besteht. Es ist nicht auszuschließen, daß ein Teil dieser Lösungsmittel durch Diffusion in das Grundwasser gerät und dieses verunreinigt. Ähnliches gilt für die in der Deutschen Auslegeschrift 1 914 554 beschriebenen isocyanathaltigen Zubereitungen, die zum Abdichten von Bodenformationen und Tiefbaukonstruktionen dienen sollen. Bei Zweikomponentensystemen, bestehend aus Mischungen von Polyisocyanaten und Polyolen, muß man bei der Injektion in von Grundwasser durchströmten Fundamenten mit einer Trennung der beiden Komponenten rechnen, bevor die chemische Reaktion zwischen den beiden Komponenten abgeschlossen ist. Das hängt u. a. damit zusammen, daß die Wassermischbarkeit bzw. Wasserlöslichkeit, der beiden Komponenten stark unterschiedlich ist. Bei Zweikomponentensystemen ist also das Übertreten zumindestens einer Komponente in das Grundwasser nicht auszuschließen.

Ein weiteres Kriterium für die Beurteilung von Abdichtungsharzen ist die nach der Härtung erfolgte Schrumpfung. Angestrebt wird nach Abschluß der chemischen Reaktion eine ausreichende Volumenbeständigkeit, wobei ein Schrumpfmaß von 10 bis 15 % toleriert werden kann. Die Volumenbeständigkeit des ausgehärteten Kunstkarzes ist insofern wichtig, als eine dauerhafte Abdichtung angestrebt wird, die durch Volumenkontraktion des Abdichtungsharzes nicht gefährdet werden darf. Es versteht sich, daß lösungsmittelhaltige Isocyanatderivate durch Verdunstung des Lösungsmittels nicht volumenbeständig sein können.

Entscheidend für die Eignung von Isocyanatharzen für die Rißverpressung ist selbstverständlich eine ausreichend niedrige Viskosität, damit der Transport des Abdichtungsharzes im Bauwerksgefüge ausreichend schnell verlaufen kann.

Der Erfindung lag somit die Aufgabe zugrunde, ein neues Verfahren zum Abdichten von Bauwerken zur Verfügung zu stellen, bei welchem Abdichtungsmittel zum Einsatz gelangen, die zur Vermeidung von Verunreinigungen am Grund- und Trinkwasser unter weitgehender Eliminierung von Lösungsmitteln nur eine Bindemittelkomponente enthalten, und die außerdem nach der Aushärtung nur einen geringen Schrumpf aufweisen.

Diese Erfindung konnte durch das nachstehend näher beschriebene erfindungsgemäße Verfahren gelöst werden.

Gegenstand der vorliegenden Erfindung ist ein Verfahren zur Abdichtung von Rissen und Undichtigkeiten im Bauwerken durch Einpressen von flüssige Verbindungen mit freien Isocyanatgruppen, sowie gegebenenfalls Hilfs- und Zusatzstoffe aufweisenden Abdichtungsmitteln in die abzudichtenden Bauwerke und Umsetzung der freien Isocyanatgruppen mit im abzudichtenden Bauwerk vorhandenen Wasser, dadurch gekennzeichnet, daß man im wesentlichen lösungsmittelfreie Abdichtungsmittel verwendet, welche als freie Isocyanatgruppen aufweisende Verbindungen Umsetzungsprodukte von Polyhydroxypolyethern mit mindestens 20 Gew.-%, bezogen auf Polyisocyanat, 2,4'-Diisocyanatdiphenylmethan aufweisenden Polyisocyanatgemischen der Diphenylmethanreihe in einem NCO/OH-Äquivalentverhältnis von 2:1 bis 15:1 enthalten.

Die beim erfindungsgemäßen Verfahren zum Einsatz gelangenden Abdichtungsmittel enthalten als wesentliche Komponente, d. h. als Bindemittel freie Isocyanatgruppen aufweisende Umsetzungsprodukte aus, mindestens 20 Gew.-%, bezogen auf Gesamtgewicht der Polyisocyanatkomponente, an 2,4'-Diisocyanatodiphenylmethan aufweisenden Polyisocyanatgemischen der Diphenylmethanreihe mit Polyetherpolyolen in einem NCO/OH-Äquivalentverhältnis von 2:1 bis 15:1, vorzugsweise 4:1 bis 10:1.

Bei den zur Herstellung der genannten Umsetzungsprodukte geeigneten Polyisocyanatgemischen der Diphenylmethanreihe handelt es sich um Gemische, die, bezogen auf Gemisch, mindestens 20 Gew.-%, im allgemeinen 20 bis 80 Gew.-% und vorzugsweise 30 bis 70 Gew.-%, 2,4'-Diisocyanatdiphenylmethan enthalten. Neben diesen 2,4'-Isomeren enthält die Polyisocyanatkomponente im allgemeinen weitere isomere bzw. homologe Polyisocyanate der Diphenylmethanreihe. Dies bedeutet, daß es sich bei der Polyisocyanatkomponente im allgemeinen entweder um Gemische aus 2,4'-Diisocyanatodiphenylmethan mit 4,4'-Diisocyanato-diphenylmethan und gegebenenfalls 0 bis 20 Gew.-%, bezogen auf Gesamtgemisch an 2,2'-Diisocyanato-diphenylmethan oder aber um Gemische dieser Isomeren mit höherkernigen Polyphenyl-polymethylen-polyisocyanaten handelt. In den letztgenannten Gemischen liegt im allgemeinen ein Gehalt von 10 bis 60 Gew.-%, bezogen auf Gesamtgemisch an derartigen höherkernigen Polyisocyanaten vor. Das erstgenannte Gemisch kann beispielsweise durch Abdestillieren eines Diisocyanatgemisches der angegebenen Zusammensetzung aus einem Polyisocyanatgemisch erhalten werden, wie es durch Phosgenierung von Anilin/Formaldehyd-Kondensaten entsteht. Das ebenfalls geeignete höherkernige Polyisocyanate enthaltende Gemisch kann beispielsweise durch Rückvermischen des zuletzt genannten Destillationsproduktes mit an 4,4'-Diisocyanato-diphenylmethan verarmtem Phosgenierungsprodukt beispielsweise gemäß DE-B 1 913 214 erhalten werden. Es ist auch möglich, ein derartiges Gemisch, d. h. ein Polyisocyanatgemisch, dessen Gehalt an 2,4'-Diisocyanato-diphenylmethan den erfindungswesentlichen Grenzen entspricht, direkt durch entsprechende Steuerung der Anilin/Formaldehyd-Kondensation zu erhalten. Die US-A 3 277 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminodiphenylmethan reichen Kondensate können dann direkt die einsetzbaren Polyisocyanate erhalten werden. Auch in der DE-A 1 937 685 sowie in der US-A 3 362 979 werden Wege zu derartigen Polyisocyanatgemischen gewiesen. Besonders gut geeignete Polyisocyanatgemische bestehen aus

a) 0 bis 5 Gew.-% 2,2'-Diisocyanatodiphenylmethan,
b) 20 bis 80, vorzugsweise 30 bis 70, Gew.-% 2,4'-Diisocyanatodiphenylmethan und
c) 80 bis 20, vorzugsweise 70 bis 30, Gew.-% 4,4'-Diisocyanatodiphenylmethan und/oder höher als difunktionellen Polyisocyanaten der Diphenylmethanreihe.

Dieses bevorzugte Polyisocyanatgemisch weist bei 20 °C eine Viskosität von weniger als 200 cP auf. Besonders bevorzugt ist es, ein Gemisch der genannten Art, in welchem die Komponente c) ausschließlich aus 4,4'-Diisocyanatodiphenylmethan besteht, zu verwenden.

Zur Herstellung der genannten Umsetzungsprodukte geeignete Polyetherpolyole sind beliebige, im allgemeinen 2 bis 4, vorzugsweise 2 oder 3 Hydroxylgruppen aufweisende Polyetherpolyole mit einem Molekulargewicht von 800 bis 6 000, vorzugsweise 1 000 bis 4 000, bzw. Gemische derartiger Polyether. Sie sind durch Anlagerung von Ethylenoxid und/oder Propylenoxid an geeignete Startermoleküle in an sich bekannter Weise zugänglich. Bei der Herstellung der Polyether können die genannten Alkylenoxide auch im Gemisch oder nacheinander eingesetzt werden. Geeignete Starterkomponenten sind z. B. Wasser, Ethylenglykol, Propylenglykol-1,2, Trimethylolpropan, Glycerin oder Ethylendiamin.

Die Herstellung der freie Isocyanatgruppen aufweisenden Umsetzungsprodukte erfolgt auf an sich bekannte Weise durch Umsetzung der Komponenten in den genannten Mengenverhältnissen bei 15 bis 100 °C, vorzugsweise 20 bis 50 °C.

Die so erhaltenen Umsetzungsprodukte weisen bei 20 °C im allgemeinen eine zwischen 1 000 und 5 000 mPas liegende Viskosität auf.

Die beim erfindungsgemäßen Verfahren zum Einsatz gelangenden Abdichtungsmittel enthalten im allgemeinen 40 bis 100 Gew.-%, vorzugsweise 50 bis 95 Gew.-%, der genannten Umsetzungsprodukte. Daneben können die Abdichtungsmittel auch noch Hilfs- und Zusatzstoffe enthalten. Es handelt sich hierbei beispielsweise um in der Polyurethanchemie gebräuchliche Katalysatoren wie z. B. tertiäre Amine oder organische Metallverbindungen, Weichmacher, insbesondere solche, die sich durch Beständigkeit gegenüber den alkalischen Bestandteilen der Bauwerke auszeichnen, wie z. B. Phosphorsäureester, sowie Umsetzungsprodukte von chlorsulfonierten Paraffinen mit Phenol und Phenolderivaten, welche Weichmacher oftmals in Mengen von 5 bis 50 Gew.-%, bezogen auf Gesamtgewicht des Abdichtungsmittels, eingesetzt werden, Pigmente in Pulverform oder als Farbpasten, anorganische Füllstoffe, wie z. B. Sand, Kaolin, Kreide, Bariumsulfat, Siliciumdioxid, Emulgatoren, Flammschutzmittel, Alterungsschutzmittel oder Haftvermittler. Zur Stabilisierung der durch Kohlendioxidbildung entstehenden Schaumstrukturen können auch die aus der Polyurethanschaumstoffchemie bekannten Polyetherpolysiloxane mitverwendet werden. Obwohl es sich bei den beim erfindungsgemäßen Verfahren einzusetzenden Abdichtungsmitteln um im wesentlichen lösungsmittelfreie Systeme handelt, ist die Mitverwendung von bis zu 15 Gew.-%, bezogen auf Gesamtgewicht, an niedrig siedenden Lösungsmitteln wie z. B. Ethylacetat, Butylacetat oder Methylethylketon nicht grundsätzlich ausgeschlossen um so eine bessere Benetzung des abzudichtenden Bauwerks zu erreichen. Vorzugsweise werden jedoch beim erfindungsgemäßen Verfahren völlig lösungsmittelfreie Abdichtungsmittel verwendet.

Zur Durchführung des erfindungsgemäßen Verfahrens werden die Abdichtungsmittel, die im allgemeinen bei 20 °C eine Viskosität von 500 bis 2 000 mPas aufweisen, beispielsweise nach der eingangs unter 1. bis 4. erläuterten Methode in das abzudichtende Bauwerk injiziert. Die nach der Injektion des Abdichtungsmittels ablaufende, zur Abdichtung führende chemische Reaktion ist im wesentlichen auf die Umsetzung der freien Isocyanatgruppen mit im abzudichtenden Bauwerk vorhandenen Wasser (Feuchtigkeit) zurückzuführen. Die bei dieser Reaktion entstehenden, die Abdichtung bewirkenden, Kunststoffe zeichnen sich insbesondere durch ein unter 10 % liegendes Schwundmaß aus, daß mit dem erfindungsgemäßen Verfahren eine dauerhafte Abdichtung der Bauwerke ermöglicht wird. Außerdem muß bei der Durchführung des erfindungsgemäßen Verfahrens eine negative Beeinflussung von Grund- und Trinkwasser nicht befürchtet werden. Ein weiterer Vorteil ist in dem niedrigen Isocyanat-Dampfdruck der erfindungswesentlichen Abdichtungsmittel zu sehen, wodurch der Aufwand an Arbeitsschutzmaßnahmen entsprechend gering gehalten werden kann.

Das erfindungsgemäße Verfahren eignet sich zur Abdichtung von beispielsweise Tunnelbauten, Betonwänden, Staudämmen im Untergrund, Stollen für Trinkwasser und Abwässer, Bahn- und Kanalbrücken, Wänden und Fundamenten von Kirchen und Profanbauten, U- und S-Bahn-Bauten, Rissen in Kühltürmen, Spund- und Grubenwänden oder von feuchten Kellerwänden.

Die in den nachfolgenden Beispielen genannten Prozentangaben beziehen sich auf Gewichtsprozente.

Beispiel 1

Herstellung eines lösungsmittelfreien Abdichtungsmittels.

1 000 g eines Isocyanatgruppen aufweisenden Prepolymeren, welches durch Umsetzung von 100 g eines Gemisches von 30 Gew.-% 2,4'-Diisocyanatodiphenylmethan und 70 Gew.-% 4,4'-Diisocyanatodiphenylmethan mit einem Gemisch aus 40 g Polypropylenglykol des Molekulargewichts 1 000 und 40 g eines Polyetherpolyols des Molekulargewichts 3 700, welches durch Propoxylierung von Ethylendiamin erhalten worden war, werden unter Rühren mit 500 g eines Weichmachers auf Basis eines Umsetzungsproduktes von chlorsulfoniertem Paraffin mit Kresol gemischt.

Anschließend werden nacheinander 6 g Dibutylzinndilaurat als Katalysator und 10 g eines handelsüblichen Polyalkylenoxid-Polysiloxan-Copolymeren als Stabilisator eingerührt.

Das so erhaltene gebrauchsfertige Abdichtungsmittel weist einen NCO-Gehalt von 9,9 % und eine Viskosität bei 23 °C von ca. 720 mPas auf.

Beispiel 2

Prüfung des Schrumpfverhaltens.

In 50 g des im Beispiel 1 beschriebenen Abdichtungsmittels werden in einem zylinderförmigen Gefäß mit einer Öffnung von 6 cm und einer Höhe von 20 cm 6 Gew.-% Wasser einemulgiert. Die sofort beginnende Polyharnstoffbildung führt zur Aushärtung und ist in ca. 5 Minuten bei 23 °C soweit abgeschlossen, daß die durch CO$_2$-Gasbildung bedingte Expansion beendet ist. Das Volumen der gehärteten Abdichtungsmasse beträgt 720 ml. Nach Überprüfung des Volumens nach 1, 3, und 7 Tagen Lagerung bei Raumtemperatur wurden nur geringfügige Volumenänderungen von ca. 9 % festgestellt.

Beispiel 3

Praxisversuch an einer wasserdurchlässigen Betonwand.

Die Betonschlitzwand eines Dükers ist in der Lamellenfuge leicht gerissen und wasserdurchlässig. Die durchschnittliche Rißbreite liegt bei 2 bis 3 mm. Im Abstand von 20 bis 30 cm werden entlang des vertikal verlaufenden Risses Löcher von 20 mm Durchmesser und einer Tiefe von 50 bis 60 cm gebohrt. Nach Einsetzen von Packern wird das in Beispiel 1 beschriebene Abdichtungsmittel unter Druck injiziert. Es wird dabei so verfahren, daß von unten nach oben aufsteigend soviel Abdichtungsmaterial eingepreßt wird, bis im Bereich des Packers überschüssiges Harz herausgedrückt wird. Der Materialverbrauch ist unterschiedlich und beträgt teilweise mehrere Kilo pro Bohrloch. Bereits nach Beendigung der Injektionsarbeiten läuft kein Wasser mehr aus dem abgedichteten Riß und 24 Stunden nach Beendigung der Arbeiten ist eine beginnende Abtrocknung der nassen Betonwände zu beobachten. Die Abdichtung ist elastisch, gut haftend, dauerhaft und erfordert keine Nacharbeiten.

Beispiel 4

Die Verträglichkeit mit Trinkwasser des nach Beispiel 1 hergestellten Abdichtungsmittels ist nach folgendem Verfahren überprüft worden :

Das gemäß Beispiel 2 zur Reaktion gebrachte Abdichtungsmittel wurde nach der Aushärtung mit Trinkwasser in der Weise in Kontakt gebracht, daß auf 10 l Wasser eine Berührungsfläche von 400 cm$^2$ resultierte. Nach 30 Tagen Verweilzeit ergab die anschließende Prüfung des Wassers keine Trübung, geruchliche oder geschmackliche Veränderungen. Die Bestimmung des gesamten gelösten organischen Kohlenstoffs (TOC) ergab einen Wert von 1,6 mg/l.

**Ansprüche**

1. Verfahren zur Abdichtung von Rissen und Undichtigkeiten in Bauwerken durch Einpressen von flüssige Verbindungen mit freien Isocyanatgruppen, sowie gegebenenfalls Hilfs- und Zusatzstoffe aufweisenden Abdichtungsmitteln in die abzudichtenden Bauwerke und Umsetzung der freien Isocyanatgruppen mit im abzudichtenden Bauwerk vorhandenen Wasser, dadurch gekennzeichnet, daß man im wesentlichen lösungsmittelfreie Abdichtungsmittel verwendet, welche als freie Isocyanatgruppen aufweisende Verbindungen Umsetzungsprodukte von Polyhydroxypolyethern mit, mindestens 20 Gew.-%, bezogen auf Polyisocyanat, 2,4'-Diisocyanatdiphenylmethan aufweisenden Polyisocyanatgemischen der Diphenylmethanreihe in einem NCO/OH-Äquivalentverhältnis von 2 : 1 bis 15 : 1 enthalten.

2. Verfahren gemäß Anspruch 1, dadurch gekennzeichnet, daß das Abdichtungsmittel 50 bis 95 Gew.-%, bezogen auf Gesamtgemisch, an freie Isocyanatgruppen aufweisenden Verbindungen enthält.

3. Verfahren gemäß Ansprüchen 1 und 2, dadurch gekennzeichnet, daß das Abdichtungsmittel 5 bis 50 Gew.-%, bezogen auf Gesamtgemisch, eines Weichmachers enthält.

4. Verfahren gemäß Anspruch 3, dadurch gekennzeichnet, daß der Weichmacher ein Umsetzungsprodukt aus chlorsulfoniertem Paraffin mit Phenol oder Phenolderivaten darstellt.

**Claims**

1. A process for sealing fissures and leaks in constructions by pressing sealing agents comprising liquid compounds having free isocyanate groups and optionally auxiliary aids and additives into the constructions to be sealed and reaction of the free isocyanate groups with water present in the construction to be sealed, characterised in that sealing agents are used which are substantially free of solvent and which contain, as the compounds having free isocyanate groups, reaction products of polyhydroxy polyethers with polyisocyanate mixtures of the diphenyl methane series having at least 20 % by weight, based on the polyisocyanate, of 2,4'-diisocyanato diphenyl methane, in an NCO/OH equivalent ratio of from 2 : 1 to 15 : 1.

2. A process according to claim 1, characterised in that the sealing agent contains from 50 to 95 % by weight, based on the total mixture, of the compounds having free isocyanate groups.

3. A process according to claims 1 and 2, characterised in that the sealing agent contains from 5 to 50 % by weight, based on the total mixture, of a softener.

4. A process according to claim 3, characterised in that the softener is a reaction product of a chlorosulphonated paraffin with phenol or phenol derivatives.

**Revendications**

1. Procédé d'étanchement de fissures et de zones non étanches dans des ouvrages de construction, par injection de composés liquides comportant des groupes isocyanates libres, ainsi que d'agents d'étanchement présentant éventuellement des adjuvants et additifs, dans les ouvrages à étancher, et réaction des groupes isocyanates libres avec l'eau présente dans l'ouvrage à étancher, procédé caractérisé en ce qu'on utilise des agents d'étanchement essentiellement sans solvant, qui contiennent comme composés présentant des groupes isocyanates libres des produits de réaction de polyhydroxypolyéthers avec des mélanges de polyisocyanates de la série du diphénylméthane présentant au moins 20 % en poids, par rapport au polyisocyanate, de 2,4'-diisocyanatodiphénylméthane, selon un rapport entre les équivalents de NCO et de OH compris entre 2 : 1 et 15 : 1.

2. Procédé selon la revendication 1, caractérisé en ce que l'agent d'étanchement contient 50 à 95 % en poids, par rapport au mélange total, de composés présentant des groupes isocyanates libres.

3. Procédé selon les revendications 1 et 2, caractérisé en ce que l'agent d'étanchement contient 5 à 50 % en poids, par rapport au mélange total, d'un plastifiant.

4. Procédé selon la revendication 3, caractérisé en ce que le plastifiant est un produit de réaction d'une paraffine chlorosulfonée avec du phénol ou des dérivés de phénols.